# EUROPÄISCHE PATENTSCHRIFT

(11) **EP 3 225 783 B1**
(45) Veröffentlichungstag und Bekanntmachung des Hinweises auf die Patenterteilung: **26.10.2022**
(21) Anmeldenummer: 16201333.8
(22) Anmeldetag: 30.11.2016
(51) Int. Cl.: F01D 9/04, F01D 11/12

(54) **EINLAUFBELAG FÜR EINE ÄUSSERE LUFTDICHTUNG EINER STRÖMUNGSMASCHINE**
RUNNING-IN LINING FOR AN OUTER AIR SEAL OF A TURBOMACHINE
GARNITURE DE RODAGE POUR UN JOINT EXTERNE D'ÉTANCHÉITÉ À L'AIR D'UNE TURBOMACHINE

(30) Priorität: 03.12.2015 DE 102015224160
(43) Veröffentlichungstag der Anmeldung: 04.10.2017
(73) Patentinhaber: MTU Aero Engines AG, 80995 München (DE)
(72) Erfinder: Kufner, Petra, 85586 Poing (DE); Gieg, Walter, 82223 Eichenau (DE); Stanka, Rudolf, 84431 Rattenkirchen (DE); Schneider, René, 85521 Ottobrunn (DE); Cleesattel, Norman, 85604 Zorneding (DE); Lorenz, Joachim, 85250 Altomünster (DE)

(56) Entgegenhaltungen:
- US-A1- 2009 148 278
- US-A1- 2014 271 142

## Beschreibung

Die Erfindung betrifft einen Einlaufbelag für eine äußere Luftdichtung einer Strömungsmaschine. Die Erfindung betrifft weiterhin ein Verfahren zum Herstellen eines solchen Einlaufbelags, eine äußere Luftdichtung für eine Strömungsmaschine sowie eine Strömungsmaschine mit einer solchen äußere Luftdichtung.

Bei Strömungsmaschinen wie etwa thermischen Gasturbinen oder Flugtriebwerken dreht sich ein Rotor mit einer Vielzahl von Laufschaufeln gegenüber einem Stator, der durch das umgebende Gehäuse gebildet ist. Um einen hohen Wirkungsgrad zu erzielen, soll möglichst das gesamte Arbeitsgas der Strömungsmaschine den vorgesehenen Strömungspfad durchströmen und die Laufschaufeln beaufschlagen. Entsprechend soll vermieden werden, dass zwischen den freien Enden der Laufschaufeln und dem gegenüberliegenden Gehäuse Arbeitsgas vorbeiströmen kann, da dies zu einer Verringerung des Wirkungsgrads der Strömungsmaschine führt. Zu diesem Zweck wird am äußeren Gehäuse eine äußere Luftdichtung, das sogenannte Outer-Air-Seal (OAS) angeordnet, so dass unter allen Betriebsbedingungen möglichst geringe Strömungsverluste an Arbeitsgas im Bereich der freien Enden der Laufschaufeln auftreten. Die äußere Luftdichtung besteht dabei aus mehreren, kreisringförmig angeordneten Einlaufbelägen, die jeweils ein segmentförmiges Substrat aufweisen, das eine Honigwabenstruktur mit einer den Laufschaufeln des Rotors zuzuwendenden Einlauffläche trägt. Während des Betriebs der Strömungsmaschine stellt der Einlaufbelag die Einlauf- bzw. Dichtfläche für die Laufschaufelspitzen zur Verfügung. Die Laufschaufelspitzen werden dazu üblicherweise gepanzert bzw. mit Dichtfinnen versehen und reiben bei Kontakt Material im Bereich der Einlauffläche der Honigwabenstruktur ab. Eine gattungsgemäße Luftdichtung ist beispielsweise aus der US 2009/0148278 A1 bekannt.

Da das OAS aber in Form miteinander verbundener Segmente ausgeführt ist, entwölbt es sich unter Thermallast im Betrieb, wodurch entlang des Umfangs ein ungleichmäßiger Einrieb durch die Laufschaufelspitzen auftritt. Damit wird auch der Dichtspalt ungleichmäßig vergrößert, was wiederum zu größeren Leckagen und einer Verschlechterung des Wirkungsgrads der Strömungsmaschine führt.

Allgemein sei angemerkt, dass sich die Begriffe "Axial-" bzw. "axial", "Radial-" bzw. "radial" und "Umfangs-" stets auf die Maschinen- bzw. Rotationsachse der Strömungsmaschine beziehen, sofern sich aus dem Kontext nicht implizit oder explizit etwas anderes ergibt.

Aufgabe der vorliegenden Erfindung ist es, einen Einlaufbelag der eingangs genannten Art zu schaffen, welcher einen verringerten Dichtspalt während des Betriebs einer zugeordneten Strömungsmaschine sicherstellt. Weitere Aufgaben der Erfindung bestehen darin, ein Verfahren zum Herstellen eines solchen Einlaufbelags sowie eine äußere Luftdichtung und eine Strömungsmaschine mit wenigstens einem derartigen Einlaufbelag bereitzustellen.

Die Aufgaben werden erfindungsgemäß durch einen Einlaufbelag mit den Merkmalen des Patentanspruchs 1, ein Verfahren gemäß Patentanspruch 7 zum Herstellen eines solchen Einlaufbelags, eine äußere Luftdichtung mit den Merkmalen des Patentanspruchs 9 sowie durch eine Strömungsmaschine mit den Merkmalen des Patentanspruch 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen des jeweils anderen Erfindungsaspekts und umgekehrt anzusehen sind.

Ein erster Aspekt der Erfindung betrifft einen Einlaufbelag für eine äußere Luftdichtung einer Strömungsmaschine, insbesondere eines Flugtriebwerks. Erfindungsgemäß wird ein verringerter Dichtspalt während des Betriebs einer zugeordneten Strömungsmaschine dadurch sichergestellt, dass eine radiale Dicke der Honigwabenstruktur (14) in Umfangsrichtung variiert . Mit anderen Worten wird der Einlaufbelag in Umfangsrichtung konturiert ausgebildet und besitzt wenigstens einen Bereich mit einer vergleichsweise größeren und wenigstens einen Bereich mit einer vergleichsweise geringeren Dicke. Hierdurch kann der Einlaufbelag mit an den jeweiligen Einsatzzweck optimierten Radien- bzw. Dicken-Verläufen ausgestattet werden, um eine im Betrieb entstehende Entwölbung des Einlaufbelags zu kompensieren. Beispielsweise kann der Einlaufbelag im Fall eines Flugtriebwerks für einen Reiseflug-Betriebszustand optimiert werden, so dass ein über den Umfang gleichmäßigerer und geringerer Einlauf der Laufschaufeln in die Honigwabenstruktur erreicht wird, was wiederum einen verringerten Radial- oder Dichtspalt und einen entsprechend höheren Wirkungsgrad einer zugeordneten Strömungsmaschine sicherstellt.

In einer vorteilhaften Ausgestaltung der Erfindung ist es vorgesehen, dass das Substrat kreisringsegmentförmig ist und/oder in Umfangsrichtung eine zumindest im Wesentlichen konstante radiale Dicke besitzt. Mit anderen Worten ist das Substrat, welches die Honigwabenstruktur trägt, nicht konturiert ausgebildet, sondern ist in Umfangsrichtung kreisringsegmentförmig bzw. weist eine konstante Dicke auf. Hierdurch sind einerseits eine einfache und zuverlässige Anbindung der Honigwabenstruktur an das Substrat und andererseits eine einfache und zuverlässige Anbindung des Substrats an eine üblicherweise kreisförmige Innenwand eines Gehäuses einer zugeordneten Strömungsmaschine sichergestellt.

Vorzugsweise können sowohl die radial äußere Oberfläche der Honigwabenstruktur, welche an das Substrat angrenzt und mit diesem verbunden ist, als auch die radial innere Oberfläche der Honigwabenstruktur, d.h. die Einlauffläche, in einer Schnittebene orthogonal zur Maschinen- bzw. Rotationsachse der Strömungsmaschine kreisbogenförmig ausgebildet sein, wobei jedoch die Mittelpunkte der beiden Kreisbögen nicht zusammenfallen. Insbesondere kann der Mittelpunkt des Kreisbogens, der die radial äußere Oberfläche der Honigwabenstruktur definiert, weiter von dem Einlaufbelag entfernt sein als der Mittelpunkt des Kreisbogens, der die Einlauffläche definiert. Der Mittelpunkt des Kreisbogens, der die radial äußere Oberfläche der Honigwabenstruktur definiert, liegt vorzugsweise im kalten und montierten Zustand des Einlaufbelags auf der Maschinen- bzw. Rotationsachse der Strömungsmaschine, wohingegen der Mittel des Kreisbogens, der die Einlauffläche definiert, in radialer Richtung zwischen der Maschinen- bzw. Rotationsachse der Strömungsmaschine und dem Einlaufbelag liegt. Sind somit eine Vielzahl von erfindungsgemäßen Einlaufbelägen ringförmig um die Maschinen- bzw. Rotationsachse der Strömungsmaschine montiert, so liegen im kalten Zustand der Strömungsmaschine vorzugsweise alle radial äußeren Oberflächen der Honigwabenstruktur auf einer gemeinsamen Zylinder- oder Kegelfläche, deren Mittelpunkt durch die Maschinenachse definiert wird, wohingegen dies für die radial inneren Oberflächen der Honigwabenstruktur nicht zutrifft. Auf diese Weise können die einzelnen Einlaufbeläge radial außen einen geschlossenen Ring bilden. Erwärmen sich die montierten Einlaufbeläge jedoch während des Hochfahrens der Strömungsmaschine, so liegen vorzugsweise bei Erreichen vorbestimmten Temperatur alle radial inneren Oberflächen der Honigwabenstruktur auf einer gemeinsamen Zylinder- oder Kegelfläche, deren Mittelpunkt durch die Maschinenachse definiert wird, wohingegen dies für die radial äußeren Oberflächen der Honigwabenstruktur zumindest nicht mehr unbedingt zutreffen muss.

Indem die Honigwabenstruktur in Umfangsrichtung unterschiedliche lokale Dicken besitzt, kann eine besonders einfache und präzise Konturierung der Einlauffläche erzielt werden.

Es kann dabei vorgesehen sein, dass der Einlaufbelag derart ausgebildet ist, dass sich in einer bestimmungsgemäßen Einbaulage des Einlaufbelags in der Strömungsmaschine ein Radialabstand der Einlauffläche zu einer Maschinenachse der Strömungsmaschine in axialer Richtung nicht ändert. Mit anderen Worten kann ein beliebiger Startpunkt auf der Einlauffläche des Einlaufbelags ausgewählt werden, wobei sich ausgehend von diesem Startpunkt bei Fortschreiten in bzw. gegen die axiale Richtung der Abstand von der Einlauffläche zu der Maschinen- bzw. Rotationsachse der Strömungsmaschine nicht ändert. Dabei ist selbstverständlich auf einen fabrikneuen Zustand des Einlaufbelags abzustellen, d.h. ein Zustand, bei dem Dichtfinnen einer der Einlauffläche gegenüberliegenden Laufschaufelreihe der Strömungsmaschine noch keine Einriebvertiefungen in der Einlauffläche hinterlassen haben.

Alternativ kann es jedoch auch vorteilhaft sein, wenn der Einlaufbelag derart ausgebildet ist, dass sich in einer bestimmungsgemäßen Einbaulage des Einlaufbelags in der Strömungsmaschine ein Radialabstand der Einlauffläche zu einer Maschinenachse der Strömungsmaschine in axialer Richtung ändert. Dies kann vorzugsweise sprunghaft der Fall sein, so dass die Einlauffläche einen Radialsprung aufweist. Dabei sind vorzugsweise die Bereiche axial vor und axial hinter dem Radialsprung jeweils so ausgebildet, dass sich der Radialabstand der Einlauffläche zur Maschinenachse in Axialrichtung nicht ändert. Beispielweise kann der axial vordere Bereich einer ersten Dichtfinnenreihe der Laufschaufel radial gegenüberliegen, wohingegen der axial hintere Bereich einer zweiten Dichtfinnenreihe der Laufschaufel radial gegenüberliegt.

In einer weiteren vorteilhaften Ausgestaltung der Erfindung ist es vorgesehen, dass der Einlaufbelag in Umfangsrichtung einen zwischen einem ersten Endbereich und einem zweiten Endbereich angeordneten Mittelbereich aufweist, wobei der erste und der zweite Endbereich eine größere radiale Dicke aufweisen als der Mittelbereich. Anders ausgedrückt ist die radiale Dicke des Einlaufbelags in Umfangsrichtung am Segmentende dicker als in der Mitte. Dies erlaubt eine besonders gute Kompensation des Entwölbens des Einlaufbelags während des Betriebs einer zugeordneten Strömungsmaschine. Vorzugsweise ist die geringste Dicke des Einlaufbelags genau in der Mitte bezüglich der Umfangsrichtung.

Weitere Vorteile ergeben sich, wenn die radiale Dicke des Einlaufbelags im Mittelbereich höchstens 99,5 % der radialen Dicke des Einlaufbelags im ersten und/oder zweiten Endbereich beträgt. Unter einer Dicke von höchstens 99,5 % sind beispielsweise Dicken von 99,5 %, 99,4 %, 99,3 %, 99,2 %, 99,1 %, 99,0 %, 98,9 %, 98,8 %, 98,7 %, 98,6 %, 98,5 %, 98,4 %, 98,3 %, 98,2 %, 98,1 %, 98,0 %, 97,9 %, 97,8 %, 97,7 %, 97,6 %, 97,5 %, 97,4 %, 97,3 %, 97,2 %, 97,1 %, 97,0 %, 96,9 %, 96,8 %, 96,7 %, 96,6 %, 96,5 %, 96,4 %, 96,3 %, 96,2 %, 96,1 %, 96,0 %, 95,9 %, 95,8 %, 95,7 %, 95,6 %, 95,5 %, 95,4 %, 95,3 %, 95,2 %, 95,1 %, 95,0 % oder weniger sowie entsprechende Zwischenwerte wie beispielsweise 98,60 %, 98,59 %, 98,58 %, 98,57 %, 98,56 %, 98,55 %, 98,54 %, 98,53 %, 98,52 %, 98,51 % usw. zu verstehen. Beispielsweise kann die radiale Dicke des Einlaufbelags bzw. der Honigwabenstruktur in einem Endbereich oder in beiden Endbereichen etwa 0,204 cm betragen, während die Dicke im Mittelbereich bzw. in der Mitte etwa 0,201 cm, das heißt etwa 98,52 % der Endbereich-Dicke(n) beträgt.

Besonders gute Dichteigenschaften ergeben sich, wenn die radiale Dicke des Einlaufbelags in Umfangsrichtung vom ersten Endbereich zum Mittelbereich hin und/oder vom zweiten Endbereich zum Mittelbereich hin monoton, insbesondere streng monoton abnimmt.

Ein zweiter Aspekt der Erfindung betrifft ein Verfahren zum Herstellen eines Einlaufbelags gemäß dem ersten Erfindungsaspekt, wobei ein verringerter Dichtspalt während des Betriebs einer zugeordneten Strömungsmaschine dadurch sichergestellt wird, dass ein Einlaufbelag mit einem Substrat, welches eine Honigwabenstruktur mit einer Laufschaufeln eines Rotors der Strömungsmaschine zuzuwendenden, kreissegmentförmigen Einlauffläche trägt, bereitgestellt und in Umfangsrichtung konturiert wird, so dass eine radiale Dicke der Honigwabenstruktur in Umfangsrichtung variiert. Mit anderen Worten ist es im Unterschied zum Stand der Technik vorgesehen, dass zunächst ein kreisringsegmentförmiger Einlaufbelag mit einer in Umfangsrichtung zumindest im Wesentlichen konstanten Dicke bereitgestellt und anschließend derart konturiert wird, dass er wenigstens einen Bereich mit einer vergleichsweise größeren und wenigstens einen Bereich mit einer vergleichsweise geringeren Dicke besitzt. Hierdurch kann der Einlaufbelag mit an den jeweiligen Einsatzzweck optimierten Radien- bzw. Dicken-Verläufen ausgestattet werden, um eine im Betrieb entstehende Entwölbung des Einlaufbelags zu kompensieren. Beispielsweise kann der Einlaufbelag im Fall eines Flugtriebwerks für einen Reiseflug-Betriebszustand optimiert werden, so dass ein über den Umfang gleichmäßigerer und geringerer Einlauf der Laufschaufeln in die Honigwabenstruktur erreicht wird, was wiederum einen verringerten Dichtspalt und einen entsprechend höheren Wirkungsgrad einer zugeordneten Strömungsmaschine sicherstellt. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung wird die Honigwabenstruktur zum Konturieren zumindest bereichsweise einem Trennverfahren unterworfen. Hierdurch können Bereiche mit geringerer Dicke besonders schnell, einfach und präzise hergestellt werden. Als Trennverfahren kann insbesondere ein spanendes Trennverfahren wie Schleifen verwendet werden. Grundsätzlich können aber auch ein oder mehrere andere Trennverfahren verwendet werden.

Ein dritter Aspekt der Erfindung betrifft eine äußere Luftdichtung für eine Strömungsmaschine, welche mehrere ringförmig angeordnete Einlaufbeläge umfasst. Ein verringerter Dichtspalt während des Betriebs einer zugeordneten Strömungsmaschine wird dabei erfindungsgemäß dadurch sichergestellt, dass zumindest einer der Einlaufbeläge gemäß dem ersten Erfindungsaspekt ausgebildet und/oder gemäß dem zweiten Erfindungsaspekt hergestellt ist. Indem einer, mehrere oder alle Einlaufbeläge der äußeren Luftdichtung erfindungsgemäß ausgebildet sind, kann das Entwölben der einzelnen Einlaufbeläge im Betrieb einer zugeordneten Strömungsmaschine optimal kompensiert werden. Weitere sich ergebende Merkmale und deren Vorteile sind den Beschreibungen des ersten und des zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts und umgekehrt anzusehen sind.

Ein vierter Aspekt der Erfindung betrifft eine Strömungsmaschine, insbesondere ein Flugtriebwerk, welche ein Gehäuse und einen im Gehäuse angeordneten und um eine Drehachse drehbaren Rotor aufweist, wobei zwischen dem Gehäuse und Laufschaufel des Rotors eine äußere Luftdichtung angeordnet ist, welche mehrere ringförmig angeordnete Einlaufbeläge umfasst. Ein verringerter Dichtspalt während des Betriebs der Strömungsmaschine wird dabei erfindungsgemäß dadurch sichergestellt, dass zumindest einer der Einlaufbeläge gemäß dem ersten Erfindungsaspekt ausgebildet und/oder gemäß dem zweiten Erfindungsaspekt hergestellt ist und/oder dass die äußere Luftdichtung gemäß dem dritten Erfindungsaspekt ausgebildet ist. Die sich hieraus ergebende Merkmale und deren Vorteile sind den Beschreibungen des ersten, zweiten und dritten Erfindungsaspekts zu entnehmen, wobei vorteilhafte Ausgestaltungen des ersten, zweiten und dritten Erfindungsaspekts als vorteilhafte Ausgestaltungen des vierten Erfindungsaspekts und umgekehrt anzusehen sind.

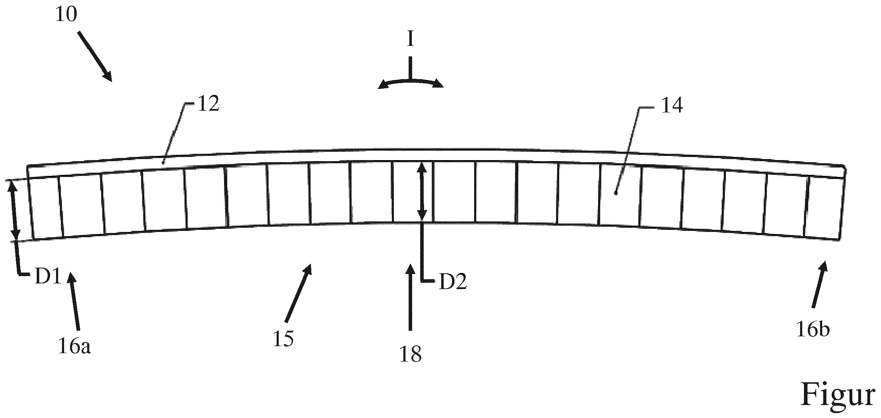

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt die einzige Figur einen erfindungsgemäßen Einlaufbelag in schematischer Ansicht von vorne, d.h. in einer Ansicht entlang der nicht dargestellten Maschinenachse der Strömungsmaschine.

Die einzige Figur zeigt einen erfindungsgemäßen Einlaufbelag 10 für eine äußere Luftdichtung (outer air seal, OAS) in schematischer Ansicht von vorne. Der Einlaufbelag 10 umfasst ein kreisringsegmentförmiges Substrat 12, welches eine Honigwabenstruktur 14 mit einer Einlauffläche 15 trägt, die zur Verringerung und zum Kleinhalten eine Radialspaltes zu Laufschaufeln eines Rotors und zur besseren Abdichtung eines Gehäuses eines Flugtriebwerks gegenüber den sich mit dem Rotor um eine Drehachse drehenden Laufschaufeln dient. In Strömungsmaschinen, wie Flugtriebwerken, sind der Wirkungsgrad und das Betriebsverhalten in hohem Maße davon abhängig, ob es gelingt, den Radial- oder Dichtspalt zwischen den Laufschaufeln und dem Gehäuse so gering wie möglich zu halten, um Leckagen zu verhindern. Die aus dem Stand der Technik bekannten Einlaufbeläge der OAS-Segmente sind daher mit einer in Umfangsrichtung konstanten Dicke hergestellt, wodurch sie jeweils eine kreissegmentförmige Einlauffläche besitzen. Dadurch entstehen während des Betriebs in Umfangsrichtung aber unterschiedliche Einreibtiefen der Laufschaufeln, da sich die Einlaufbeläge unter Thermallast im Betrieb entwölben, wodurch sich entsprechend ungleichmäßige Radialspalte mit vergleichsweise hohen Leckagen ausbilden.

Um dies zu vermeiden, weist der erfindungsgemäße Einlaufbelag 10 in Umfangsrichtung (Doppelpfeil I) des OAS eine konturierte Querschnittsdicke auf. Man erkennt, dass die Honigwabenstruktur 14 in den seitlichen Endbereichen 16a, 16b des Einlaufbelags 10 dicker ist als im Mittelbereich 18, wodurch sich eine gegenüber dem Substrat 12 nach innen gewölbte Einlauffläche 15 ergibt. Die Dicke D1 der Honigwabenstruktur 14 an den jeweiligen Segmentenden 16a, 16b beträgt im gezeigten Ausführungsbeispiel exemplarisch etwa 0,204 cm, während die Dicke der Honigwabenstruktur 14 in der Mitte 18 des Einlaufbelags 10 exemplarisch etwa 0,201 cm beträgt. Zwischen den jeweiligen Endbereichen 16a, 16b und dem Mittelbereich 18 nimmt die Dicke der Honigwabenstruktur 14 stetig ab, wodurch sich ein stufenloser Konturverlauf ergibt. Dabei können vorzugsweise sowohl die radial äußere Oberfläche der Honigwabenstruktur 14, welche an das Substrat 12 angrenzt und mit diesem verbunden ist, als auch die radial innere Oberfläche der Honigwabenstruktur 15, d.h. die Einlauffläche 15, in der in der Figur dargestellten Schnittansicht orthogonal zur Triebwerks- bzw, Maschinenachse kreisbogenförmig ausgebildet sein, wobei jedoch die Mittelpunkte der beiden Kreisbögen nicht zusammenfallen. Insbesondere kann der Mittelpunkt des Kreisbogens, der die radial äußere Oberfläche der Honigwabenstruktur definiert, weiter von dem Einlaufbelag 10 entfernt sein als der Mittelpunkt des Kreisbogens, der die Einlauffläche 15 definiert. Ferner kann der Mittelpunkt des Kreisbogens, der die radial äußere Oberfläche der Honigwabenstruktur definiert, bevorzugt auf der Triebwerks- bzw. Maschinenachse liegen.

Das Substrat 12 besitzt demgegenüber eine gleichmäßige bzw. durchgängig konstante Dicke bzw. ist kreisringsegmentförmig ausgebildet. Durch diesen optimierten Dickenverlauf der Honigwabenstruktur 14 und damit des Einlaufbelags 10 wird das Entwölben des Einlaufbelags 10 im Betrieb besonders gut kompensiert. Zur Herstellung dieser Konturierung kann beispielsweise zunächst ein herkömmlicher Einlaufbelag mit konstanter Dicke bzw. einer kreissegmentförmigen Einlauffläche bereitgestellt und bereichsweise entsprechend zurückgeschliffen werden, um die gewünschte Konturierung zu erzeugen.

### Bezugszeichenliste:

- 10: Einlaufbelag
- 12: Substrat
- 14: Honigwabenstruktur
- 16a: Endbereich
- 16b: Endbereich
- 18: Mittelbereich
- I: Umfangsrichtung
- D1: erste radiale Dicke
- D2: zweite radiale Dicke

## Patentansprüche

1. Einlaufbelag (10) für eine äußere Luftdichtung einer Strömungsmaschine, insbesondere eines Flugtriebwerks, umfassend ein segmentförmiges Substrat (12), welches eine Honigwabenstruktur (14) mit einer Laufschaufeln eines Rotors der Strömungsmaschine zuzuwendenden Einlauffläche (15) trägt,
**dadurch gekennzeichnet, dass**
der Einlaufbelag (10) mit einer in Umfangsrichtung variierenden radialen Dicke der Honigwabenstruktur (14) ausgebildet ist.

2. Einlaufbelag (10) nach Anspruch 1,
**dadurch gekennzeichnet, dass**
das Substrat (12) kreisringsegmentförmig ist und/oder in Umfangsrichtung eine zumindest im Wesentlichen konstante radiale Dicke besitzt.

3. Einlaufbelag (10) nach Anspruch 1 oder 2,
**dadurch gekennzeichnet, dass**
der Einlaufbelag (10) derart ausgebildet ist, dass sich in einer bestimmungsgemäßen Einbaulage des Einlaufbelags (10) in der Strömungsmaschine ein Radialabstand der Einlauffläche (15) zu einer Maschinenachse der Strömungsmaschine in axialer Richtung nicht ändert oder die Einlauffläche (15) einen Radialsprung aufweist.

4. Einlaufbelag (10) nach einem der Ansprüche 1 bis 3,
**dadurch gekennzeichnet, dass**
dieser einen in Umfangsrichtung betrachtet zwischen einem ersten Endbereich (16a) und einem zweiten Endbereich (16b) angeordneten Mittelbereich (18) aufweist, wobei der erste und der zweite Endbereich (16a, 16b) eine größere radiale Dicke aufweisen als der Mittelbereich (18).

5. Einlaufbelag (10) nach Anspruch 4,
**dadurch gekennzeichnet, dass**
die radiale Dicke des Einlaufbelags (10) im Mittelbereich (18) höchstens 99,5 % der radialen Dicke des Einlaufbelags im ersten und/oder zweiten Endbereich (16a, 16b) beträgt.

6. Einlaufbelag (10) nach Anspruch 4 oder 5,
**dadurch gekennzeichnet, dass**
die radiale Dicke des Einlaufbelags (10) in Umfangsrichtung vom ersten Endbereich (16a) zum Mittelbereich (18) hin und/oder vom zweiten Endbereich (16b) zum Mittelbereich (18) hin monoton, insbesondere streng monoton abnimmt.

7. Verfahren zum Herstellen eines Einlaufbelags (10) nach einem der Ansprüche 1 bis 6, bei welchem ein Einlaufbelag mit einem Substrat (12), welches eine Honigwabenstruktur (14) mit einer Laufschaufeln eines Rotors der Strömungsmaschine zuzuwendenden, kreissegmentförmigen Einlauffläche trägt, bereitgestellt und in Umfangsrichtung konturiert wird, so dass eine radiale Dicke der Honigwabenstruktur (14) in Umfangsrichtung variiert.

8. Verfahren nach Anspruch 7,
**dadurch gekennzeichnet, dass**
die Honigwabenstruktur (14) zum Konturieren zumindest bereichsweise einem Trennverfahren unterworfen, insbesondere geschliffen wird.

9. Äußere Luftdichtung für eine Strömungsmaschine, umfassend mehrere ringförmig angeordnete Einlaufbeläge (10),
**dadurch gekennzeichnet, dass**
zumindest einer der Einlaufbeläge (10) gemäß einem der Ansprüche 1 bis 6 ausgebildet und/oder gemäß einem der Ansprüche 7 oder 8 hergestellt ist.

10. Strömungsmaschine, insbesondere Flugtriebwerk, welche ein Gehäuse und einen im Gehäuse angeordneten und um eine Drehachse drehbaren Rotor aufweist, wobei zwischen dem Gehäuse und Laufschaufeln des Rotors eine äußere Luftdichtung angeordnet ist, welche mehrere ringförmig angeordnete Einlaufbeläge (10) umfasst, **dadurch gekennzeichnet, dass**
zumindest einer der Einlaufbeläge (10) gemäß einem der Ansprüche 1 bis 6 ausgebildet und/oder gemäß einem der Ansprüche 7 oder 8 hergestellt ist und/oder dass die äußere Luftdichtung gemäß Anspruch 9 ausgebildet ist.

## Claims

1. Inlet coating (10) for an outer air seal of a turbomachine, in particular an aircraft engine, comprising a segment-shaped substrate (12) which supports a honeycomb structure (14) having an inlet surface (15) which faces rotor blades of a rotor of the turbomachine, **characterized in that**
the inlet coating (10) is formed with a radial thickness of the honeycomb structure (14) that varies in the peripheral direction.

2. Inlet coating (10) according to claim 1,
**characterized in that**
the substrate (12) is in the shape of an annular segment and/or has an at least substantially constant radial thickness in the peripheral direction.

3. Inlet coating (10) according to either claim 1 or claim 2,
**characterized in that**
the inlet coating (10) is designed in such a way that, when the inlet coating (10) is installed in an intended position in the turbomachine, a radial distance between the inlet surface (15) and a machine axis of the turbomachine does not change in the axial direction, or the inlet surface (15) has a radial jump.

4. Inlet coating (10) according to any of claims 1 to 3,
**characterized in that**
it has a central region (18) arranged between a first end region (16a) and a second end region (16b) viewed in the peripheral direction, the first and the second end region (16a, 16b) having a greater radial thickness than the central region (18).

5. Inlet coating (10) according to claim 4,
**characterized in that**
the radial thickness of the inlet coating (10) in the central region (18) is at most 99.5% of the radial thickness of the inlet coating in the first and/or second end region (16a, 16b).

6. Inlet coating (10) according to either claim 4 or claim 5,
**characterized in that**
the radial thickness of the inlet coating (10) decreases monotonically, in particular strictly monotonically, in the peripheral direction from the first end region (16a) to the central region (18) and/or from the second end region (16b) to the central region (18).

7. Method for producing an inlet coating (10) according to any of claims 1 to 6, wherein an inlet coating is provided with a substrate (12) which supports a honeycomb structure (14) having an inlet surface which is in the shape of an annular segment and faces rotor blades of a rotor of the turbomachine, and in the peripheral direction is contoured so that a radial thickness of the honeycomb structure (14) varies in the peripheral direction.

8. Method according to claim 7,
**characterized in that**
the honeycomb structure (14) is at least partially subjected to a separating process for contouring, in particular is ground.

9. Outer air seal for a turbomachine, comprising a plurality of annularly arranged inlet coatings (10),
**characterized in that**
at least one of the inlet coatings (10) is designed according to any of claims 1 to 6 and/or produced according to either claim 7 or claim 8.

10. Turbomachine, in particular an aircraft engine, which has a housing and a rotor arranged in the housing and rotatable about an axis of rotation, with an outer air seal being arranged between the housing and rotor blades of the rotor, which air seal comprises a plurality of annularly arranged inlet coatings (10),
**characterized in that**
at least one of the inlet coatings (10) is designed according to any of claims 1 to 6 and/or is produced according to either claim 7 or claim 8 and/or **in that** the outer air seal is designed according to claim 9.

## Revendications

1. Revêtement de rodage (10) pour un joint d'étanchéité à l'air extérieur d'une turbomachine, en particulier d'un moteur d'aéronef, comprenant un substrat (12) en forme de segment, lequel supporte une structure en nid d'abeille (14) comportant une surface de rodage (15) tournée vers les aubes mobiles d'un rotor de la turbomachine,
**caractérisé en ce que**
le revêtement de rodage (10) est conçu avec une épaisseur radiale de la structure en nid d'abeille (14), laquelle varie dans la direction circonférentielle.

2. Revêtement de rodage (10) selon la revendication 1,
**caractérisé en ce que**
le substrat (12) est en forme de segment en anneau circulaire et/ou présente une épaisseur radiale au moins sensiblement constante dans la direction circonférentielle.

3. Revêtement de rodage (10) selon la revendication 1 ou 2,
**caractérisé en ce que**
le revêtement de rodage (10) est conçu de telle sorte que, dans une position de montage prévue du revêtement de rodage (10) dans la turbomachine, une distance radiale de la surface de rodage (15) par rapport à un axe de machine de la turbomachine ne change pas dans la direction axiale ou la surface de rodage (15) comporte un pas radial.

4. Revêtement de rodage (10) selon l'une quelconque des revendications 1 à 3, **caractérisé en ce que**
celui-ci comporte une zone centrale (18), laquelle, vue dans la direction circonférentielle, est disposée entre une première zone d'extrémité (16a) et une seconde zone d'extrémité (16b), dans lequel les première et seconde zones d'extrémité (16a, 16b) présentent une épaisseur radiale supérieure à celle de la zone centrale (18).

5. Revêtement de rodage (10) selon la revendication 4,
**caractérisé en ce que**
l'épaisseur radiale du revêtement de rodage (10) dans la zone centrale (18) est au maximum de 99,5 % de l'épaisseur radiale du revêtement de rodage dans les première et/ou seconde zones d'extrémité (16a, 16b).

6. Revêtement de rodage (10) selon la revendication 4 ou 5,
**caractérisé en ce que**
l'épaisseur radiale du revêtement de rodage (10) diminue de manière monotone, en particulier de manière strictement monotone, dans la direction circonférentielle de la première zone d'extrémité (16a) à la zone centrale (18) et/ou de la seconde zon d'extrémité (16b) à la zone centrale (18).

7. Procédé de fabrication d'un revêtement de rodage (10) selon l'une quelconque des revendications 1 à 6, dans lequel un revêtement de rodage est muni d'un substrat (12), lequel supporte une structure en nid d'abeille (14) comportant une surface de rodage en forme de segment circulaire tournée vers les aubes mobiles d'un rotor de la turbomachine, et est profilé dans la direction circonférentielle de telle sorte qu'une épaisseur radiale de la structure en nid d'abeille (14) varie dans la direction circonférentielle.

8. Procédé selon la revendication 7,
**caractérisé en ce que**
la structure en nid d'abeille (14), pour être profilée, est soumise, au moins par zones, à un procédé de séparation, en particulier est meulée.

9. Joint d'étanchéité à l'air extérieur pour une turbomachine, comprenant plusieurs revêtements de rodage (10) disposés en forme d'anneau,
**caractérisé en ce que**
l'au moins un des revêtements de rodage (10) est conçu selon l'une quelconque des revendications 1 à 6 et/ou fabriqué selon l'une quelconque des revendications 7 ou 8.

10. Turbomachine, en particulier moteur d'aéronef, lequel comporte un carter et un rotor disposé dans le carter et pouvant tourner autour d'un axe de rotation, dans laquelle un joint d'étanchéité à l'air extérieur est disposé entre le carter et les aubes mobiles du rotor, et lequel comprend plusieurs revêtements de rodage (10) disposés en forme d'anneau,
**caractérisé en ce que**
l'au moins un des revêtements de rodage (10) est conçu selon l'une quelconque des revendications 1 à 6 et/ou est fabriqué selon l'une quelconque des revendications 7 ou 8 et/ou que le joint d'étanchéité à l'air extérieur est conçu selon la revendication 9.
